# EUROPEAN PATENT APPLICATION

(11) **EP 4 366 141 A1**
(43) Date of publication of application: **08.05.2024**
(21) Application number: 22832711.0
(22) Date of filing: 03.06.2022
(51) Int. Cl.: H02K 9/19

(54) **ROTARY ELECTRIC MACHINE**

(30) Priority: 28.06.2021 JP 2021106542
(71) Applicant: DENSO CORPORATION, Kariya-city, Aichi 448-8661 (JP)
(72) Inventor: AMAKAWA, Masaki, Kariya-city, Aichi 448-8661 (JP); HANDA, Yuichi, Kariya-city, Aichi 448-8661 (JP); KAWAI, Keisuke, Kariya-city, Aichi 448-8661 (JP); KAMIZONO, Syuya, Kariya-city, Aichi 448-8661 (JP); SAKAMOTO, Akira, Kariya-city, Aichi 448-8661 (JP)
(74) Representative: TBK
(86) International application number: PCT/JP2022/022640
(87) International publication number: WO 2023/276553

(57) **Abstract**

A rotating electrical machine (10) includes a stator (30) equipped with a stator winding (31), a rotor (20) arranged to face the stator, a housing in which the stator and the rotor are disposed, and a coolant supply unit (70). The coolant supply unit is located vertically above the stator and the rotor in the housing in a condition where the rotating electrical machine is mounted in place. The coolant supply unit works to deliver liquid coolant into the housing. A coolant guide (A2, 83) is provided to direct the coolant, as supplied from the coolant supply unit, into an air gap between the stator and the rotor in the housing.

## Description

### CROSS REFERENCE TO RELATED DOCUMENT

The present application claims the benefit of priority of Japanese Patent Application No. 2021-106542 filed on June 28, 2021, the disclosure of which is incorporated in its entirety herein by reference.

### Technical Field

This disclosure relates generally to a rotating electrical machine.

### Background of Art

Japanese Patent First Publication No. 2020-22344 discloses a rotating electrical machine equipped with a cooling mechanism working to cool a stator and a rotor. The rotating electrical machine has a first oil path, a second oil path, and a third oil path. The first oil path is arranged vertically above the stator. The second oil path is formed inside the rotor. The third oil path is formed along a wall at one of axially opposed ends of the rotating electrical machine and extends to connect between the first and second oil paths. The cooling mechanism discharges oil from a coolant outlet of the first oil toward the stator and also delivers a flow of the oil into the second oil path within the rotor, thereby cooling the rotor in addition to the stator.

### PRIOR ART DOCUMENT

### PATENT LITERATURE

PATENT LITERATURE 1 : Japanese Patent First Publication No. 2020-22344

### SUMMARY OF THE INVENTION

The above-described cooling mechanism is also designed to have an oil path which supplies the oil to the second oil path and is partially shared with the first oil path to deliver the oil to the first oil path in order to simplify the layout of the oil paths. This structure, however, faces drawbacks in that the oil paths need to pass through the stator and the rotor, and each of the oil paths is required to have an oil outlet(s). This leads to a complicated structure of the cooling mechanism.

This disclosure was made in view of the above problem. It is an object of this disclosure to provide a rotating electrical machine which has a simplified structure and achieves a required degree of cooling the rotating electrical machine.

Embodiments, as disclosed in this specification, employ technical measures different from each other for achieving respective objects thereof. Objects, features, and beneficial advantages offered thereby will become clear with reference to the following detailed description and the accompanying drawings.

The first means is to provide a rotating electrical machine which comprises: (a) a stator which is equipped with a stator winding; (b) a rotor which is arranged to face the stator; (c) a housing in which the stator and the rotor are disposed; (d) a coolant supply unit which is arranged vertically above the stator and the rotor in a condition where the rotating electrical machine is mounted in place, the coolant supply unit working to deliver liquid coolant into the housing; and (e) a coolant guide which serves to direct a flow of the coolant, as delivered from the coolant supply unit, into an air gap between the stator and the rotor.

The coolant supply unit serving to deliver the liquid coolant is arranged vertically above the stator and the rotor in the rotating electrical machine mounted in place. The coolant guide serves to deliver the coolant, as supplied from the coolant supply unit, into the air gap between the stator and the rotor. The coolant entering the air gaps is subjected to the centrifugal force created by rotation of the rotor, so that it spreads in the circumferential direction of the rotor and serves to facilitate simultaneous cooling of the stator and the rotor. This achieves a required degree of cooling of the rotating electrical machine without need for complicating the structure thereof.

The second means is to provide the rotating electrical machine, as defined in the first means, wherein the rotating electrical machine has an outer-rotor structure in which the rotor is located radially outside the stator and is used with an axis thereof oriented to extend substantially in a horizontal direction. The stator winding has a winding bend defined by an axial end portion thereof which is bent radially outward. The winding bend works as the coolant guide.

In the rotating electrical machine of the outer rotor type with the axis thereof extending substantially in the horizontal direction, the winding bend of the stator winding is oriented radially outward and extends substantially in the vertical direction. The winding bend, therefore, faces the axial end surface of the rotor. The winding bend, therefore, functions as the coolant guide to direct the coolant from the axial end portion of the stator winding into the air gap.

The third means is to provide the rotating electrical machine, as defined in the first means, wherein the rotating electrical machine has an outer-rotor structure in which the rotor is located radially outside the stator and is used with an axis thereof oriented to extend substantially in a horizontal direction. The stator winding includes multi-phase windings defined by a plurality of winding segments. Each of the winding segments includes a pair of intermediate conductive portions and connecting conductive portions which are located at a first axial end and a second axial end of the stator winding. The connecting conductive portions connects the intermediate conductive portions together in an annular shape. Within an interval between the intermediate conductive portions of each of the winding segments for a first phase, a corresponding one of the intermediate conductive portions of each of the winding segments for a second phase, so that the intermediate conductive portions of the multi-phase windings are arranged in a predetermined order in a circumferential direction of the stator winding. At least one of the connecting conductive portions of the winding segments overlapping each other at one of axial ends of the stator winding is bent radially outward to define a winding bend which serves as the coolant guide.

In the stator winding which is made up of the plurality of winding segments, within the interval between the intermediate conductive portions of each of the winding segments for the first phase, one of the intermediate conductive portions of a corresponding one of the winding segments for the second phase is disposed. In other words, the intermediate conductive portions for all the phases are arranged in the predetermined order in the annular form. At least one of the connecting conductive portions of the winding segments overlapping each other at one of the axial ends of the stator winding is bent radially outward, thereby avoiding physical interference between the winding segments arranged in the circumferential direction of the stator winding. The winding bend defined by the radially outward bent end of the connecting conductive portion is used as the coolant guide to deliver the coolant from the axial end of the stator winding into the air gap between the stator and the rotor.

The fourth means is to provide the rotating electrical machine, as defined in the second or third means, wherein the rotor has an axial end surface facing the winding bend in an axial direction thereof to define an annular coolant path which extends along the winding bend in a circumferential direction of the stator winding.

The axial end surface of the rotor and the winding bend defined by the axial end of the stator winding face each other in the axial direction, thereby creating a groove-like channel between the axial end surface of the rotor and the winding bend of the stator winding. The groove-like channel defines the annular coolant path in which the coolant flows. The coolant flowing in the annular coolant path contacts the winding bend, thereby cooling the axial end portion of the stator winding, which enhances the efficiency in cooling the whole of the stator winding.

The fifth means is to provide the rotating electrical machine, as defined in the fourth means, wherein the stator winding has protrusions which protrude from the winding bend in an axial direction of the stator winding within the annular coolant path and are arranged at a given interval away from each other in the circumferential direction of the stator winding.

The annular coolant path is, as described above, defined between the axial end surface of the rotor and the winding bend of the stator winding. The protrusions which protrude from the winding bend and are disposed away from each other in the circumferential direction of the stator winding, so that the protrusions work to direct the flow of coolant in the annular coolant path toward the rotor, that is, into the air gap. This also enhances the cooling efficiency in the rotating electrical machine.

The sixth means is to provide the rotating electrical machine, as defined in the first means, wherein the rotating electrical machine has an outer-rotor structure in which the rotor is located radially outside the stator and is used with an axis thereof oriented to extend substantially in a horizontal direction. The stator includes a stator core around which the stator winding is wound. The stator core has an annular wall which is located outside the rotor in an axial direction of the rotor on an axial end portion of the stator core and faces an axial end surface of the rotor. The annular wall serves as the coolant guide.

The annular wall is, as described above, located axially outside the rotor on the axial end portion of the stator core and faces the axial end surface of the rotor. The annular wall is used as the coolant guide to direct a flow of the coolant from the axial end portion of the stator core into the air gap, thereby enhancing the cooling efficiency in the rotating electrical machine.

The seventh means is to provide the rotating electrical machine, as defined in any one of the second to sixth means, wherein the rotor includes magnet unit and a magnet holder which retains the magnet unit. The magnet holder includes a cylindrical member to which the magnet unit is secured and an end plate secured to one of axial ends of the cylindrical member. The coolant guide is arranged at one of axial ends of the stator winding which is located far away from the end plate of the magnet holder. The magnet holder has formed therein a through-hole which is located between the magnet unit and the end plate and passes through the magnet holder in a radial direction of the rotor.

The rotor of the rotating electrical machine in which the magnet holder includes the cylindrical member to which the magnet unit is attached and the end plate secured to one of the axial ends of the cylindrical member and in which the coolant guide is arranged at one of the axial ends of the stator winding which is located far away from the end plate of the magnet holder have a possibility that the coolant entering the air gap goes out of the air gap away from the coolant guide, i.e., toward the end plate. The through-holes passing through the magnet holder between the magnet unit and the end plate in the radial direction of the magnet holder functions to discharge the coolant with aid of rotation of the rotor. The discharging of the coolant from the through-holes results in generation of a vacuum within space close to the end plate, thereby facilitating the entry of flow of the coolant into the air gap. This further enhances the cooling efficiency in the air gap.

The eighth means is to provide the rotating electrical machine, as defined in any one of the first to seventh means, wherein the coolant supply unit includes a coolant path and a coolant outlet. The coolant path extends along a wall of the housing. The coolant outlet has the coolant, as delivered from the coolant path, drop down. The coolant path has a momentum reducer which works to decrease momentum of flow of the coolant.

When the coolant supply of the housing unit delivers the coolant to a given portion of the stator winding, too strong the flow of coolant in the coolant path may result in a risk that the coolant which has drained from the coolant outlet may spatter. In order to alleviate such a risk, the coolant supply unit is equipped with the momentum reducer arranged in the coolant path. The momentum reducer works to reduce the momentum of flow of the coolant to avoid spattering of the coolant. This ensures the stability of delivery of the coolant into the air gap, thereby eliminating the need for increasing a flow volume of the coolant to compensate for a lack caused by spattering of the coolant and also enhances the efficiency in cooling the stator.

### BRIEF DESCRIPTION OF THE DRAWINGS

The above object, other objects, features, and advantages of or offered by this disclosure will be understood more fully from the detailed description given hereinbelow and from the accompanying drawings.

In the drawings:
Fig. 1 is a cross sectional view which illustrates an overall structure of a rotating electrical machine;
Fig. 2 is a cross sectional view which illustrates a rotor, a stator, and a stator holder in a rotating electrical machine;
Fig. 3 is a perspective view of a rotor;
Fig. 4 is a perspective view of a stator;
Fig. 5 is a perspective view which illustrates an assembly of two winding segments;
Fig. 6 is a cross sectional view which illustrates axial ends of a rotor and a stator;
Fig. 7 is a plan view which illustrates a structure of a coolant supply unit;
Fig. 8 is a cross sectional view which illustrates flows of coolant in a rotating electrical machine;
Fig. 9 is a plan view which demonstrates flows of coolant, as viewed in a vertical direction of a stator;
Fig. 10 is a plan view which demonstrates flows of coolant, as viewed in a vertical direction of a stator;
Fig. 11 is a cross sectional view which illustrates a rotor, a stator, and a stator holder;
Figs. 12(A) and 12(B) are views which illustrate modifications of winding segments; and
Fig. 13 is a cross sectional view which illustrates a rotating electrical machine.

### EMBODIMENT FOR CARRYING OUT THE INVENTION

Embodiments of a rotating electrical machine in this disclosure will be described below with reference to the drawings. In the following discussion of the embodiments or modifications, the same or similar reference numbers or symbols will refer to the same or similar parts, and explanation thereof in detail will be omitted here. The rotating electrical machine in the embodiments may be used as an electrical generator or an electrical motor for vehicles.

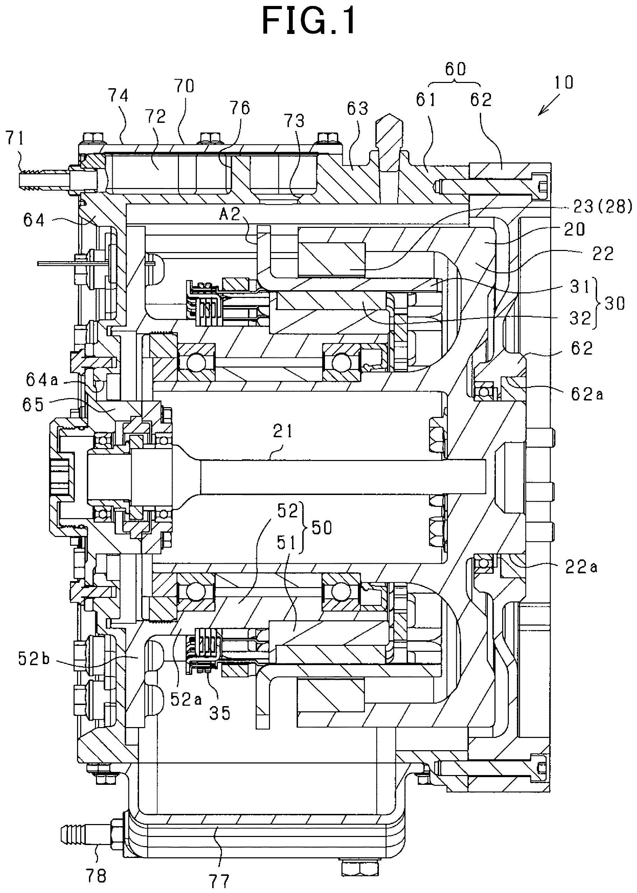

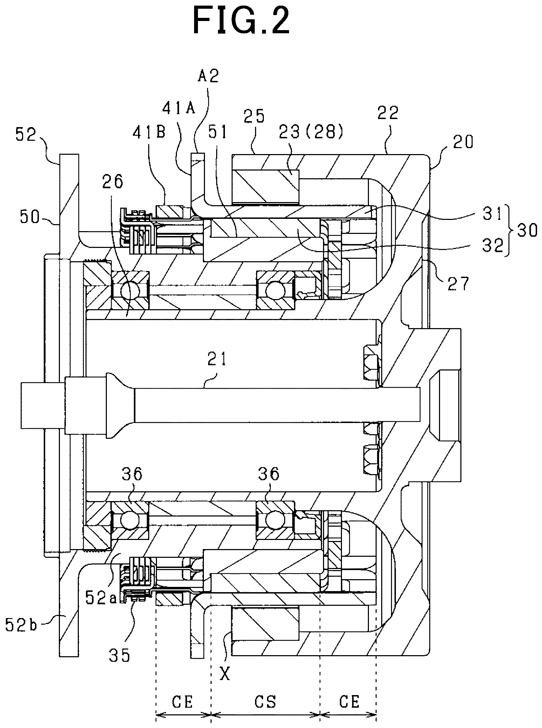

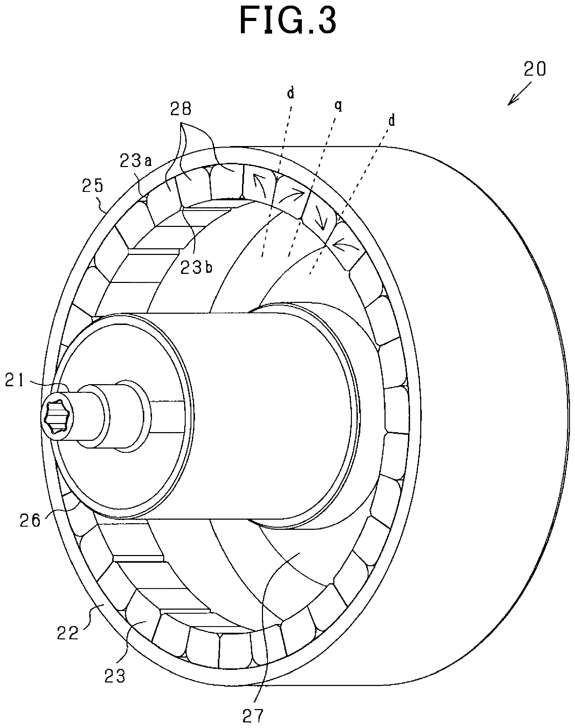

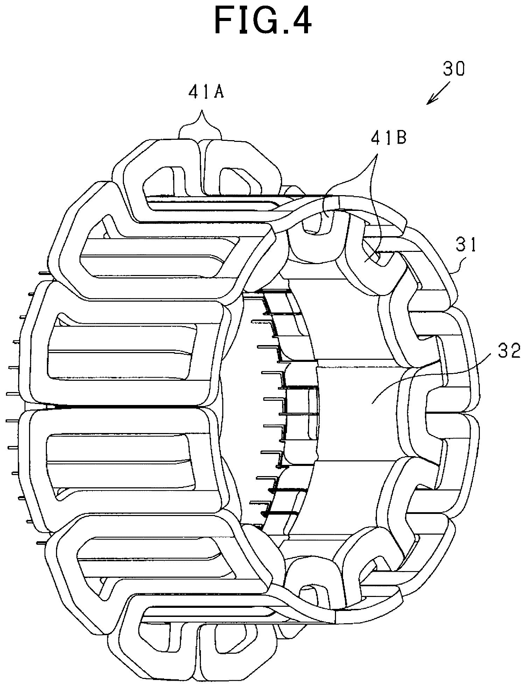

Fig. 1 is a cross-sectional view which shows an overall structure of the rotating electrical machine 10 in this embodiment. Fig. 2 is a cross-sectional view which illustrates the rotor 20, the stator 30, and the stator holder 50 of the rotating electrical machine 10. Fig. 3 is a perspective view which illustrates the rotor 20. Fig. 4 is a perspective view which illustrates the stator 30. In the following discussion, a direction in which an axis of rotation of the rotating electrical machine 10 extends will be referred to as an axial direction. A direction radially extending from the axis of rotation of the rotating electrical machine 10 will be referred to as a radial direction. A direction extending circumferentially around the axis of rotation of the rotating electrical machine 10 will be referred to as a circumferential direction. The rotating electrical machine 10 is implemented by an outer-rotor surface-magnet three-phase rotating electrical machine and generally includes the rotor 20, the stator 30, the stator holder 50, and the housing 60 in which the rotor 20, the stator 30, and the stator holder 50 are disposed. The rotating electrical machine 10 is mounted in the vehicle to have the axial direction oriented exactly or approximately in the horizontal direction. Accordingly, in Fig. 1, the lateral direction will be the horizontal direction, while the upward or downward direction will be the vertical direction.

The rotor 20, as illustrated in Figs. 2 and 3, includes the rotating shaft 21, the rotor carrier 22 integrally secured to the rotating shaft 21, and the annular magnet unit 23 attached to the rotor carrier 22. The rotor carrier 22 includes the outer cylinder 25 and the inner cylinder 26 which are located coaxially with the rotating shaft 21. The rotor carrier 22 also includes the end plate 27 attached to one (which will also be referred to as a first end) of axially opposed ends of thereof. The magnet unit 23 is secured to an inner periphery of the outer cylinder 25. The rotor carrier 22 has a second end which is opposed to the first end and opened. The rotor carrier 22 serves as a magnet holder. The outer cylinder 25 will also be referred to as a cylindrical member. The end plate 27 is in a substantially circular plate and has a central portion to which the rotating shaft 21 which extends toward an open end of the rotor carrier 22 is firmly secured.

The magnet unit 23 is made up of a plurality of permanent magnets 28 disposed to have magnetic polarities (i.e., north poles and south poles) alternatively arranged adjacent each other in a circumferential direction of the rotor 20. Each of the permanent magnets 28 is made of an anisotropic permanent magnet having a radially inner circumferential surface serving as a magnetic flux acting surface which faces the stator 30 and has a region near the *d*-axis where magnetic flux is concentrated. Specifically, each of the permanent magnets 28 is configured to have a magnetic path extending in an arc shape along an easy axis of magnetization thereof. The easy axis of magnetization extends more parallel to the *d*-axis in a region close to the *d-*axis that is the center of a magnetic pole than that in a region close to the *q*-axis that is a magnetic boundary between the *N*-pole and the *S*-pole.

The magnet unit 23, as clearly illustrated in Fig. 3, has the recesses 23a and 23b formed in a radially inner periphery and a radially outer periphery thereof depending upon magnetic orientations of the permanent magnets 28. In other words, the recesses 23a and 23b are arranged at given intervals away from each other in the circumferential direction of the magnet unit 23. The magnet unit 23 has the permanent magnets 23 two for each magnetic pole. Each of the permanent magnets 28 is oriented to have the magnetic path slanting obliquely to the radial direction of the magnetic unit 23, so that the length of the magnetic path between two diagonally opposite corners (which will also be referred to below as a first and a second corner) of each of the permanent magnets 28 is shorter than that between the other diagonally opposite corners. The recesses 23a and 23b lie at the first and second corners. More specifically, the recesses 23a are formed in the radially outer circumferential surface of the magnet unit 23 which faces away from the stator 30 and lie on each of the coaxes. The recesses 23b are formed in the radially inner circumferential surface of the magnet unit 23 which faces the stator 30 and lie on each of the *q*-axes.

Next, the structure of the stator 30 will be described below.

The stator 30 is, as clearly illustrated in Figs. 2 and 4, of a tooth-less armature and includes the stator winding 31 and the stator core 32. The stator winding 31 of the stator 30 includes three phase windings each of which is made of the winding segments 41. The winding segments 41A are arranged in terms of the number of poles of the rotating electrical machine 10. The winding segments 41A are connected in series or parallel with each other for each phase. In this embodiment, the number of poles is sixteen, but may be optional. The stator core 32 is of a hollow cylindrical shape and made of a plurality of magnetic steel plates stacked on each other in the axial direction of the stator core 32.

The stator winding 31 includes the coil side CS and the coil ends *CE.* The coil side *CS* is arranged to radially face the stator core 32. The coil ends *CE* lie outside ends of the coil side *CS* in the axial direction of the stator winding 31. The coil side *CS* also radially faces the magnet unit 23 of the rotor 20. The winding segments 41 are located radially outside the stator core 32. Specifically, the winding segments 41 are mounted on the outer periphery of the stator core 32 with axially opposed ends (i.e., the coil ends CE) thereof protruding outside axially opposed ends of the stator core 32.

Each of the winding segments 41 has axially opposed ends (which will also be referred to as first and second ends) one of which is bent in the radial direction of the stator 30 and the other of which is not bent in the radial direction. Half the winding segments 41 (which will also be referred to as winding segments 41A), as clearly illustrated in Fig. 4, have the first ends (i.e., the left ends, as viewed in the drawing) bent radially outward. The remaining half the winding segments 41 which will also be referred to as winding segments 41B) have the second ends (i.e., the right ends, as viewed in the drawing) bent radially inward.

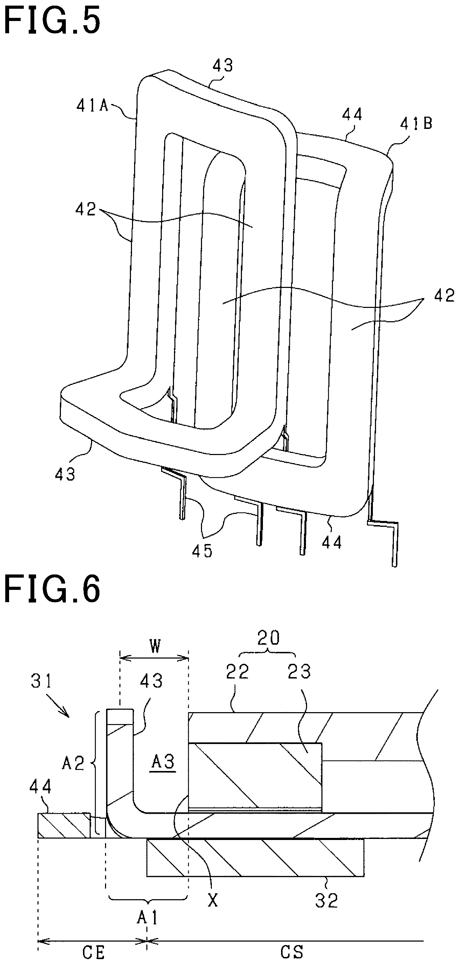

The structure of each of the winding segments 41A and 41B will be described below with reference to Fig. 5. Fig. 5 is a perspective view a combination of each of the winding segments 41A and a respective one of the winding segments 41B.

Each of the winding segments 41A and 41B includes a pair of intermediate conductive portions 42 and a pair of connecting conductive portions 43 or 44. The intermediate conductive portions 42 extend straight in parallel to each other. Each of the connecting conductive portions 43 of each of the winding segments 41A connects between an end of one of the intermediate conductive portions 42 and an end of the other intermediate conductive portion 42. Similarly, each of the connecting conductive portions 43 of each of the winding segments 41B connects between an end of one of the intermediate conductive portions 42 and an end of the other intermediate conductive portion 42. The intermediate conductive portions 42 and the connecting conductive portions 43 and 44 are arranged in an annular shape as a whole. The intermediate conductive portions 42 of each of the winding segments 41 are located at an interval of selected coil pitches (also called coil span) away from each other in the circumferential direction of the stator winding 31. Each of the intermediate conductive portions 42 for one of the three phases is disposed between the intermediate conductive portions 42 of one of the winding segments 41 for a second one of the three phases. Specifically, in this embodiment, the intermediate conductive portions 42 of each of the winding segments 41 are arranged at an interval of two coil pitches away from each other. Within the interval between the intermediate conductive portions 42 of each of the winding segments 41 for a first one of the three phases, one of the intermediate conductive portions 42 of a corresponding one of the winding segments 41 for a second one of the three phases and one of the intermediate conductive portions 42 of a corresponding one of the winding segments 41 for a third one of the three phases are disposed. In the winding segments 41A and 41B arrayed to complete the stator winding 31, the intermediate conductive portions 42 of each of the winding segments 41A and a corresponding one of the winding segments 41B are arranged close to each other in the circumferential direction of the stator winding 31. Each of the winding segments 41A and 41B is made of a conductive wire wound multiple times.

The connecting conductive portions 43 and 44 define the axially opposed coil ends *CE* of the stator winding 31. One of the connecting conductive portions 43 of each of the winding segments 41A is bent radially, while the other connecting conductive portion 43 extends straight in the axial direction of the stator winding 31. Similarly, one of the connecting conductive portions 43 of each of the winding segments 41B is bent radially, while the other connecting conductive portion 43 extends straight in the axial direction of the stator winding 31. As viewed in the circumferential direction of the stator winding 31, each of the winding segments 41A and 41B is of an *L*-shape. The connecting conductive portions 43 of the winding segments 41A are bent radially outward, while the connecting conductive portions 43 of the winding segments 41B are bent radially inward.

In order to facilitate the arrangement of the winding segments 41A and 41B in the circumferential direction of the stator winding 31, it is advisable that the connecting conductive portions 43 be different in radial shape between the winding segments 41A and 41B, that is, in cross section, as taken in the radial direction of the stator winding 31, between the winding segments 41A and 41B. Specifically, it is preferable that the connecting conductive portion 43 of each of the winding segments 41A is shaped to have a circumferential dimension which increases toward the axial end thereof, while the connecting conductive portion 43 of each of the winding segments 41B is shaped to have a circumferential dimension which decreases toward the axial end thereof. Although not illustrated, each of the intermediate conductive portions 42 of the winding segments 41A and 41B is preferably covered with an electrical insulating film.

Each of the winding segments 41A and 41B is, as described already, made of a conductive wire wound multiple times to have the winding ends 45 that are leading and trailing ends of the conductive wire. The winding ends 45 are arranged one of the axially opposed ends of each of the winding segments 41A and 41B. The winding ends 45 extend in the axial direction of the stator winding 31. The winding module 35 is, as illustrated in Fig. 2, joined to the winding ends 45. The winding module 35 serves as a winding connector which electrically connects with the winding segments 41A and 41B of the stator winding 31. Specifically, the winding module 35 connects the winding segments 41 in parallel or in series with each other for the three phases to complete three phase windings. The three phase windings are connected together at a neutral point.

The winding module 35 is of an annular shape and equipped with electrical power busbars for the three phases and a neutral point busbar. The winding module 35 is attached to one of the axially opposed ends of the stator 30 which is, as can be seen in Fig. 2, located close to the open end of the rotor carrier 22.

The stator winding 31 in this embodiment is, as described above, shaped to have the coil ends CE which are, as illustrated in Fig. 2, located outside the stator core 32 in the axial direction. The rotor 20 has the axial end surface X (i.e., an axial end surface of the magnet unit 23). A portion of the stator winding 31 which is located axially outside the axial end surface *X* of the rotor 20 includes the coil end *CE* and a portion of the coil side *CS.* The stator winding 31, as illustrated in Fig. 6, has an axial end portion which is located axially outside the rotor 20 and bent in an *L*-shape including the first portion A1 and the second portion A2. The first portion A1 extends in the axial direction of the stator winding 31. The second portion A2 extends in the radial direction of the stator winding 31. The second portion A2 will also be referred to as a winding bend defined by the axial end of the stator winding 31 which extends outward in the radial direction of the stator winding 31.

The end of the stator core 32 and the end of the rotor 20 may be located in coincidence with each other in the axial direction, in other words, aligned with each other in the radial direction of the rotor 20 and the stator core 32. In such a case, an axial end portion of the stator winding 31 which lies outside the rotor 20 in the axial direction corresponds to only the coil end *CE.* The second portion A2 of the stator winding 31 extend perpendicular to the first portion A1, but however, may alternatively be oriented to extend obliquely relative to the first portion A1. For instance, the second portion A2 may extend at an obtuse angle to the first portion A1.

The structure of the stator holder 50 will be described below. The stator holder 50, as clearly illustrated in Fig. 2, serves as a stator holder to firmly retain the stator 30 and includes the first holder 51 and the second holder 52. The first holder 51 is attached to the inner periphery of the stator core 32. The second holder 52 is secured to an inner periphery of the first holder 51. The second holder 52 includes the cylinder 52a and the flange 52b which extends radially from an axial end of the cylinder 52a. The cylinder 52a has an axial length longer than that of the first holder 51 and has the first holder 51 and the winding module 35 firmly secured thereto.

The cylinder 52a of the second holder 52 has an inner diameter greater than an outer diameter of the inner cylinder 26 of the rotor carrier 22 of the rotor 20. Two bearings 36 are disposed between the cylinder 52a of the second holder 52 and the inner cylinder 26 of the rotor carrier 22 and located away from each other in the axial direction, so that the rotor 20 is rotatable relative to an assembly of the stator 30 and the stator holder 50.

In the structure illustrated in Fig. 2, the outer cylinder 25 and the inner cylinder 26 of the rotor carrier 22 define an annular space therebetween in which the magnet unit 23 of the rotor 20, the stator 30, and the stator holder 50 are stacked on one another in the radial direction. The magnet unit 23 of the rotor 20 and the stator winding 31 (i.e., the winding segments 41) of the stator 30 have an air gap therebetween which has a preselected dimension. In the structure of Fig. 2, the axial dimension of the magnet unit 23 is smaller than that of the stator core 32, but they may alternatively be equal to each other.

The structure of the housing 60 will next be described. The housing 60 is, as can be seen in Fig. 1, arranged to surround the rotor 20, the stator 30, and the stator holder 50 both in the radial direction and in the axial direction. The housing 60 includes the first housing member 61 of a hollow cylindrical shape with a bottom and the second housing member 62 joined to an open end of the first housing member 61 using bolts. The first housing member 61 includes the cylinder 63 and the end plate 64. The second holder 52 of the stator holder 50 has the flange 52b secured to the end plate 64 of the first housing member 61. This achieves firm attachment of the stator 30 and the stator holder 50 to the housing 60.

The end plate 64 of the first housing member 61 has formed in a central portion thereof the through-hole 64a to which the hollow cylindrical body 64 is secured. The second housing member 62 has the through-hole 62a formed in a central portion thereof. The rotating shaft 21 of the rotor 20 has an axial end (which will also be referred to as a first end) thereof which is inserted into the cylindrical body 65 to be rotatable. The boss 22a of the rotor carrier 22 which is located farther away from the first end of the rotating shaft 21 is fit in the through-hole 62a of the second housing member 62 to be rotatable. The rotor 20 is, therefore, retained by the housing 60 to be rotatable.

A cooling mechanism of the rotating electrical machine 10 will be described below. This embodiment uses cooling oil as coolant or cooling medium. The cooling mechanism serves to cool the rotor 20 and the stator 30 using the cooling oil. The cooling mechanism may be of a water-cooling type using cooling liquid, such as water.

The housing 60 is equipped with the coolant supply unit 70 which deliver the coolant (i.e., cooling oil). The coolant supply unit 70 is arranged above the cylinder 63 of the housing 60 in the vertical direction, in other words, above the stator 30 and the rotor 20 of the rotating electrical machine 10 installed in the housing 60 in the vertical direction. The coolant supply unit 70 has the coolant inlet 71 made by, for example, a nipple, the coolant path 72 extending from the coolant inlet 71 in the axial direction, and the coolant outlet 73 disposed downstream of the coolant path 72. The coolant path 72 is defined by the cover plate 74 closing a groove formed in the cylinder 63. The coolant outlet 73 is located just above one of the coil ends CE of the stator winding 31 in the vertical direction.

A positional relation between the axial ends of the coolant outlet 73 and the stator winding 31 will be described below in detail. As already described with reference to Fig. 6, the stator winding 31 includes the first portion A1 and the second portion A2 which are defined by the axial end portion of the stator winding 31 and located outside the rotor 20 in the axial direction of the stator winding 31. The first portion A1 extends straight in the axial direction. The second portion A2 (i.e., the winding bend) extending in the radial direction of the stator winding 31. The coolant outlet 73 is arranged just above the first portion A1. The coolant outlet 73 and the first portion A1 overlap each other in the radial direction of the rotating electrical machine 10. A length of a portion of the first portion A1 between the axial end *X* of the rotor 20 and the second portion A2 (e.g., the longitudinal center of the second portion A2) is preferably equal to the diameter (e.g., outermost diameter) of the coolant outlet 73. "*W*" in Fig. 6 indicates a region which extends in the axial direction of the stator winding 31 and is occupied by the coolant outlet 73, in other words, to which the coolant outlet 73 is exposed in the radial direction of the stator winding 31. The diameter of the coolant outlet 73 may alternatively be selected to be smaller than the distance between the axial end X of the rotor 20 and the second portion A2. In Fig. 6, a region between the inner surface of the second portion A2 of the stator winding 31 and the axial end *X* of the rotor 20 defines the annular coolant path A3 extending in the circumferential direction of the stator winding 31 along the first portion A1 and the second portion A2.

The coolant flowing in the coolant path 72 drops down vertically from the coolant outlet 73 onto the first portion A1 of the stator winding 31. Too strong the flow of coolant in the coolant path 72 may result in a risk that the coolant which has drained from the coolant outlet 73 may spatter. In order to alleviate such a risk, the coolant supply unit 70 is equipped with a spatter prevention mechanism (i.e., a momentum reducer) to avoid spattering of the coolant which will be described below in detail.

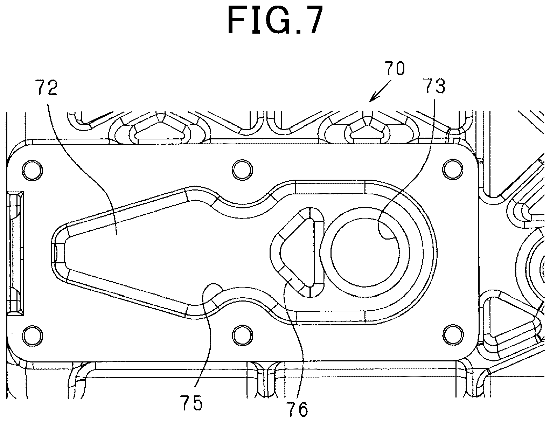

Fig. 7 is a plan view which illustrates the structure of the coolant supply unit 70. For the ease of visibility, Fig. 7 shows the coolant supply unit 70 from which the cover plate 74 is removed. The coolant supply unit 70 has, as can be seen in Fig. 7, the small-width section 75 and the wall 76. The small-width section 75 is defined by a portion of the coolant path 72 which has a decreased width. The wall 76 is located downstream of the small-width section 75 and upstream of the coolant outlet 73. The wall 76 serves as a deceleration wall to change the orientation of flow of the coolant in the coolant path 72 to reduce the momentum of the coolant. The wall 76 in this embodiment is designed to distribute the flow of coolant into two different directions, but however, it may alternatively be shaped to distribute the flow of coolant into three or more different directions or of a labyrinth structure.

After impacting the wall 76 to decrease the momentum of flow thereof, the coolant finally reaches the coolant outlet 73. This avoids the spattering of drops of the coolant when flowing down from the coolant outlet 73.

The rotating electrical machine 10 also includes, as shown in Fig. 1, the coolant collector pan 77 which is arranged below the cylinder 63 of the housing 60 in the vertical direction and serves as a reservoir to collect and store the coolant within the housing 60. The coolant collector pan 77 may be made of an oil pan which is located below the cylinder 63 and attached to a portion of the housing 60 around a lower opening formed in the bottom of the housing 60. The coolant collector pan 77 has attached thereto the coolant outlet 78 made of, for example, a nipple.

A coolant circulation path, not shown, is joined to the coolant inlet 71 and the coolant outlet 78. The coolant circulation path is equipped with, for example, an electrically operated pump and a heat dissipator, such as radiator. The electrically operated pump is actuated to circulate the coolant through the coolant circulation path and a coolant path formed in the rotating electrical machine 10.

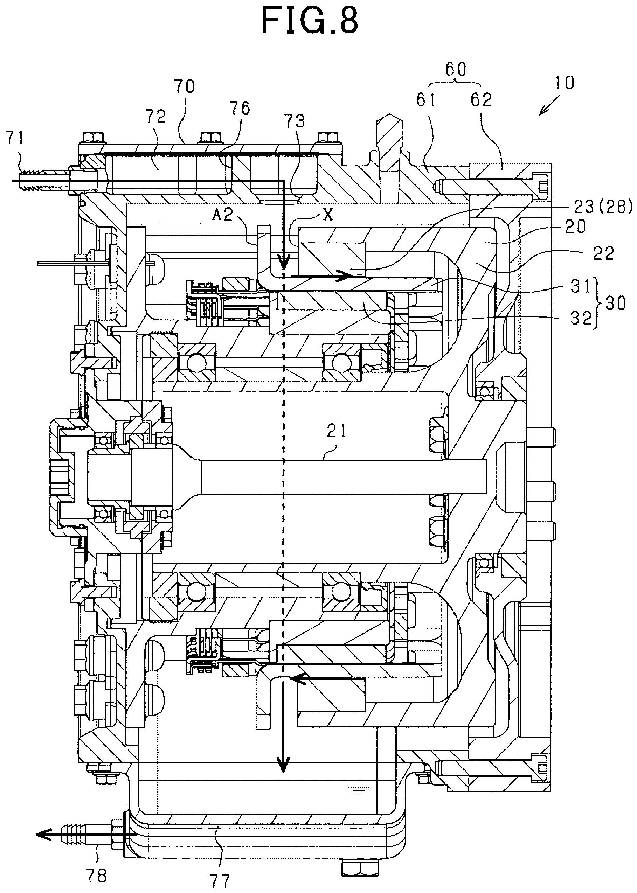

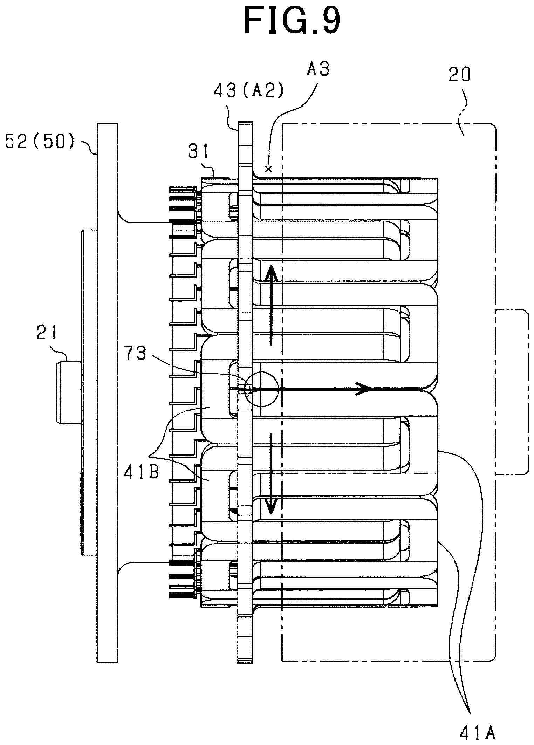

The flow of coolant, as created by the above-described cooling mechanism, within the rotating electrical machine 10 will also be discussed below in more detail. Fig. 8 is a longitudinal cross section of the rotating electrical machine 10 which demonstrates the flow of coolant. Fig. 9 is a plan view which illustrates the flow of coolant around or in the stator 30, as viewed in the vertical direction.

Upon actuation of the electrically operated pump, the coolant entering from the coolant inlet 71 travels in the coolant path 72 of the coolant supply unit 70, undergoes deceleration by the wall 76, and then drops down from the coolant outlet 73. The coolant then falls down onto the axial end of the stator winding 31 in the vertical direction. Specifically, the first portion A1 of the stator winding 31 is, as described above, located immediately below the coolant outlet 73, so that the coolant flows down from the coolant outlet 73, in other words, is delivered directly to the first portion A1 of the stator winding 31 without splashing in different directions with the aid of the deceleration of the coolant by the coolant supply unit 70.

The coolant flows the annular coolant path A3 extending between the second portion A2 (i.e., the winding bend) of the stator winding 31 and the axial end *X* of the rotor 20, enters air gaps between the stator winding 31 (i.e., the winding segments 41) and the magnet unit 23 of the rotor 20, and spreads in the circumferential direction within the air gaps due to the rotation of the rotor 20. The axial end portion of the stator winding 31 is, as described above, of an *L*-shape to have the second portion A2 extending in the radial direction of the stator winding 31, thereby directing the flow of coolant in the annular coolant path A3 into the air gaps. In other words, the second portion A2 is located far away from the rotor 20 in the axial direction of the stator winding 31 within the annular coolant path A3. The second portion A2, thus, functions as a stopper to stop the coolant from flowing away from the rotor 20, thereby facilitating the entry of the coolant into the rotor 20 (i.e., the air gaps). As already described with reference to Fig. 3, the recesses 23b which are formed in the inner periphery of the magnet unit 23 also function to facilitate the entry of the flow of coolant into the air gaps between the stator winding 31 and the magnet unit 23. The coolant entering the air gaps works to cool both the stator 30 and the rotor 20.

The rotation of the rotor 20 causes the coolant to spread into all of the air gaps. Afterwards, the coolant is collected within the coolant collector pan 77 and then discharged from the coolant outlet 78. The coolant discharged from the coolant outlet 78 is delivered from the coolant inlet 71 to the coolant supply unit 70 through the coolant circulation path and then used again to cool the rotor 20 and the stator 30.

In order to ensure the stability of the L-shape of the connecting conductive portions 43, it is preferable that the winding segments 41 have varnish impregnated therein or are equipped with shape keeping parts mounted on the shape of the connecting conductive portions 43.

The above-described embodiment offers the following beneficial advantages.

The coolant supply unit 70 serving to deliver the liquid coolant is, as described above, arranged vertically immediately above the stator 30 and the rotor 20. The stator winding 31 is designed to have the winding bends (i.e., the connecting conductive portions 43 of the winding segments 41) functioning as coolant guides to direct the coolant delivered from the coolant supply unit 70 into the air gaps between the stator 30 and the rotor 20 within the housing 60. The coolant entering the air gaps is subjected to the centrifugal force created by rotation of the rotor 20, so that it spreads in the circumferential direction of the rotor 20 and facilitates simultaneous cooling of the stator 30 and the rotor 20. This achieves a required degree of cooling of the rotating electrical machine 10 without need for complicating the structure thereof.

The rotating electrical machine 10 is, as described above, of an outer rotor type with an axis thereof extending substantially in the horizontal direction. The second portion A2 (i.e., the winding bend) of the stator winding 31 is, therefore, oriented radially outward and extends substantially in the vertical direction. The second portion A2, therefore, directly faces the axial end surface of the rotor 20. The second portion A2, therefore, functions as a coolant guide to direct the coolant from the axial end surface of the stator winding 31 into the air gaps.

The stator winding 31 is, as described above, made up of a plurality of winding segments 41. Within the interval between the intermediate conductive portions 42 of each of the winding segments 41 for the first phase, one of the intermediate conductive portions 42 of a corresponding one of the winding segments 41 for the second phase and one of the intermediate conductive portions 42 of a corresponding one of the winding segments 41 for the third phase are disposed. In other words, the intermediate conductive portions 42 for all the phases are arranged in a predetermined order in an annular form. One of the connecting conductive portions 43 and 44 of a respective two of the winding segments 41 which overlap each other in the radial direction of the stator winding 31 at one of the axial ends of the stator winding 31 is bent radially outward to form the winding bend, thereby avoiding physical interference between the winding segments 41 arranged in the circumferential direction of the stator winding 31. The second portion A2 defined by the radially outward bent portions of the connecting conductive portions 43 of the winding segments 41 is used as the coolant guide to deliver the coolant from the axial end of the stator winding 31 into the air gaps between the winding segments 41 and the magnet unit 23.

The axial end surface of the rotor 20 and the second portion A2 (i.e., the winding bend) defined by the axial end of the stator winding 31 face each other in the axial direction, thereby creating a groove-like space between the axial end surface of the rotor 20 and the second portion A2 of the stator winding 31. The groove-like space defines the annular coolant path A3 in which the coolant flows. The coolant flowing in the annular coolant path A3 contacts the second portion A2, thereby cooling the axial end portion of the stator winding 31, which enhances the efficiency in cooling the whole of the stator winding 31.

The coolant path 72 of the coolant supply unit 70, as described above, has disposed therein the wall 76 functioning as a momentum reducer to decrease the momentum of flow of the coolant, thereby minimizing a risk that the coolant may spatter when dropping down from the coolant outlet 73. This ensures the stability of delivery of the coolant into the air gap between each of the winding segments 41 and the magnet unit 23. This eliminates the need for increasing a flow volume of the coolant to compensate for a lack caused by spattering of the coolant and also enhances the efficiency in cooling the stator 30.

### OTHER EMBODIMENTS

The above embodiments may be modified in the following ways.

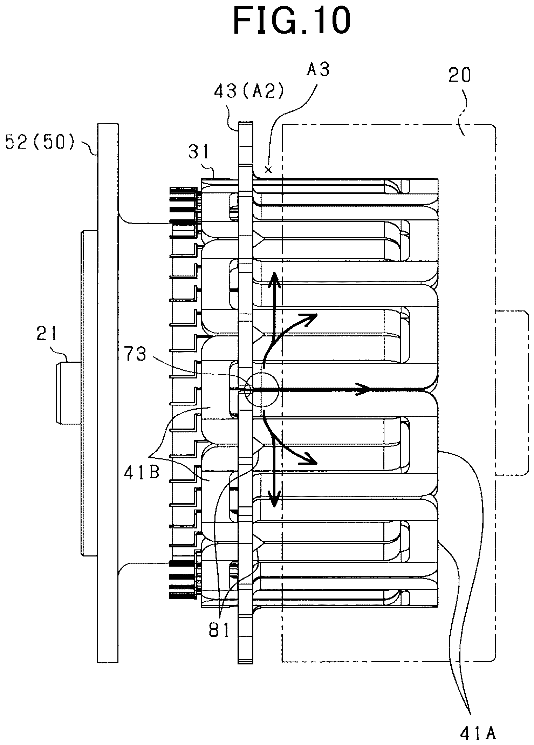

Fig. 10 is a plan view which demonstrates flows of the coolant around or in the stator 30, as viewed in the vertical direction. The second portion A2 (i.e., the winding bend) of the stator winding 31 has the protrusions 81 extending into the annular coolant path A3 in the axial direction of the stator 30. The protrusions 81 are arranged at a preselected interval away from each other in the circumferential direction of the stator winding 31. Each of the protrusions 81 is preferably located between the winding segments 41, e.g., between the winding segments 41A or the winding segments 41B.

The protrusions 81 extending from the second portion A2 in the axial direction of the stator winding 31 function as coolant guides to alter the orientation of flow of the coolant in the annular coolant path A3, as indicated by arrows in Fig. 10, to create flows of the coolant directed to the rotor 20, i.e., into the air gaps between the winding segments 41 and the magnet unit 23. This enhances the efficiency in cooling the rotor 20 and the stator 30.

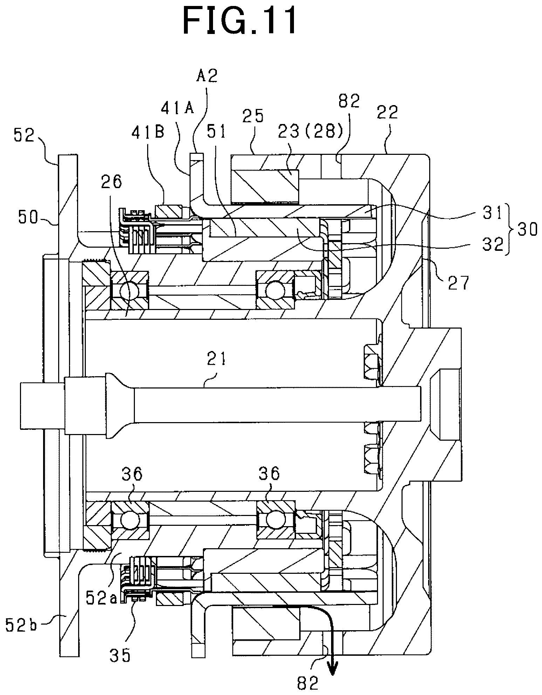

Fig. 11 is a cross sectional view which illustrates the rotor 20, the stator 30, and the stator holder 50. The outer cylinder 25 of the rotor carrier 22 has formed therein a plurality of through-holes 82 which pass through the outer cylinder 25 in the radial direction and are located between the magnet unit 23 and the end plate 27.

In the structure in Fig. 11, the stator winding 31 has the second portion A2 (i.e., the winding bend) arranged at one of the axially opposed ends of the stator winding 31 which is located far away from the end plate 27 of the rotor carrier 22. There is a possibility that the coolant entering the air gaps from the second portion A2 of the stator winding 31 goes out of the air gaps away from the second portion A2, i.e., toward the end plate 27. The through-holes 82 passing through the rotor carrier 22 in the radial direction and located between the magnet unit 23 and the end plate 27, thus, serves to discharge the coolant with aid of rotation of the rotor 20. The discharging of the coolant from the through-holes 82 results in generation of a vacuum within space close to the end plate 27 within the rotor carrier 22, thereby facilitating the entry of flow of the coolant into the air gaps. This further enhances the cooling efficiency in the air gaps.

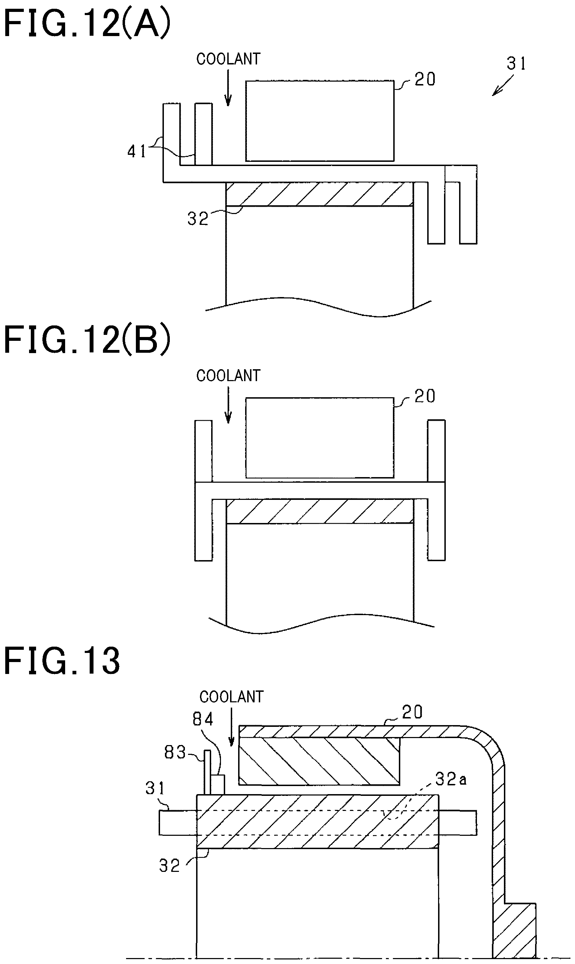

The structure of the winding segments 41 of the stator winding 31 may be modified in the following ways illustrated in Figs. 12(A) and 12(B). In Fig. 12(A), each of the winding segments 41 has connecting conductive portions at the axially opposed ends thereof. The connecting conductive portions are bent radially in opposite directions. The winding segments 41 are all identical in configuration with each other. The winding segments 41 are alternately offset from each other in the axial direction of the stator winding 31 and secured to the outer periphery of the stator core 32. In Fig. 12(B), each of the winding segments 41 is of a C-shape in a side view thereof. The winding segments 41 are arranged with the connecting conductive portions alternately oriented in radial opposite directions of the stator winding 31. Specifically, each of the winding segments 41A has the connecting conductive portions bent toward the stator core 32, while an adjacent one of the winding segments 41B has the connecting conductive portions bent toward the stator core 32. The winding segments 41 may be broken down into a plurality of assemblies and then secured to the outer periphery of the rotor 20.

In either of the structures in Figs. 12(A) and 12(B), the connecting conductive portions (i.e., the winding bend) of each of the winding segments 41 may be used as coolant guides to direct the flow of coolant into the air gaps between the stator 30 and the rotor 20, which achieves a required degree of cooling of the stator 30 and the rotor 20.

The stator winding 31 may alternatively be produced without use of the winding segments 41. For instance, the stator core 32 is configured to have teeth and slots. A conductor is wound in the slots in the form of a wave winding to complete the stator winding 31. This type of stator winding 31 is preferably designed to have axial ends bent radially outward to form the above-described winding bend.

The stator core 32 may be designed, as illustrated in Fig. 13, to have the annular wall 83 provided on the axial end thereof. The annular wall 83 is located outside the rotor 20 in the axial direction of the stator core 32 and has a major surface facing the axial end of the rotor 20. The annular wall 83 functions as the above-described coolant guide. In the structure in Fig. 13, the stator core 32 has formed therein a plurality of slots 32a in which wire is wound to form the stator winding 31. The annular wall 83 is disposed on the outer periphery of the stator core 32 and extends in the circumferential direction of the stator core 32.

The coolant is delivered vertically from above the stator core 32 onto the axial end portion of the stator core 32 and then enters the air gaps between the stator 30 and the rotor 20, thereby simultaneously cooling the stator 30 and the rotor 20.

The annular wall 83, as clearly illustrated in Fig. 13, has the protrusions 84 disposed thereon. The protrusions 84 protrude from the annular wall 83 in the axial direction of the stator core 32. The protrusions 84 may be arranged at a preselected interval away from each other in the circumferential direction of the stator core 32. The protrusions 84 serve as coolant guides to direct the flow of coolant, as moving in the annular coolant path between the axial end surface of the rotor 20 and the annular wall 83, toward the rotor 20, i.e., into the air gaps between the stator 30 and the rotor 20, thereby enhancing the cooling efficiency for the stator 30 and the rotor 20.

The rotating electrical machine 10 in this embodiment is designed to be mounted with the axis extending in the horizontal direction, but however, may be modified in the following way. The rotating electrical machine 10 may be configured to be mounted to have the axis extending substantially in the vertical direction. The end plate 64 of the first housing member 61 of the housing 60 is, therefore, located at the vertical top of the rotating electrical machine 10. The coolant supply unit 70 is preferably mounted on the end plate 64. The above-described coolant guides are also preferably arranged vertically below the coolant supply unit 70 to deliver the coolant into the air gaps between the stator 30 and the rotor 20. For instance, when the stator 30 is designed to have an in-slot-winding structure, it is preferable that the coil end of the stator winding 31 is arranged to face the rotor 20, and the coolant guides are shaped to deliver the coolant into the air gaps between the stator 30 and the rotor 20.

Although the rotating electrical machine 10 is designed as an outer surface-magnet rotating electrical machine, but however, may be designed as an interior permanent magnet rotating electrical machine.

While this disclosure has referred to the preferred embodiments, it should be appreciated that the disclosure is not limited to the embodiments. This disclosure may include a variety of combinations of the embodiments, a combination of diverse modifications of the embodiments and equivalents thereof.

## Claims

1. A rotating electrical machine (10) comprising:
a stator (30) which is equipped with a stator winding (31);
a rotor (20) which is arranged to face the stator;
a housing (60) in which the stator and the rotor are disposed;
a coolant supply unit (70) which is arranged vertically above the stator and the rotor in a condition where the rotating electrical machine is mounted in place, the coolant supply unit working to deliver liquid coolant into the housing; and
a coolant guide (A2, 83) which serves to direct a flow of the coolant, as delivered from the coolant supply unit, into an air gap between the stator and the rotor.

2. The rotating electrical machine as set forth in claim 1, wherein the rotating electrical machine has an outer-rotor structure in which the rotor is located radially outside the stator and is used with an axis thereof oriented to extend substantially in a horizontal direction,
the stator winding has a winding bend (A2) defined by an axial end portion thereof which is bent radially outward, the winding bend working as the coolant guide.

3. The rotating electrical machine as set forth in claim 1, wherein the rotating electrical machine has an outer-rotor structure in which the rotor is located radially outside the stator and is used with an axis thereof oriented to extend substantially in a horizontal direction,
the stator winding includes multi-phase windings defined by a plurality of winding segments (41),
each of the winding segments includes a pair of intermediate conductive portions (42) and connecting conductive portions (43, 44) which are located at a first axial end and a second axial end of the stator winding, the connecting conductive portions connecting the intermediate conductive portions together in an annular shape,
within an interval between the intermediate conductive portions of each of the winding segments for a first phase, a corresponding one of the intermediate conductive portions of each of the winding segments for a second phase, so that the intermediate conductive portions of the multi-phase windings are arranged in a predetermined order in a circumferential direction of the stator winding,
at least one of the connecting conductive portions of the winding segments overlapping each other at one of axial ends of the stator winding is bent radially outward to define a winding bend (A2),
the winding bend serves as the coolant guide.

4. The rotating electrical machine as set forth in claim 2 or 3, wherein the rotor has an axial end surface facing the winding bend in an axial direction thereof to define an annular coolant path (A3) which extends along the winding bend in a circumferential direction of the stator winding.

5. The rotating electrical machine as set forth in claim 4, wherein the stator winding has protrusions (81) which protrude from the winding bend in an axial direction of the stator winding within the annular coolant path and are arranged at a given interval away from each other in the circumferential direction of the stator winding.

6. The rotating electrical machine as set forth in claim 1, wherein the rotating electrical machine has an outer-rotor structure in which the rotor is located radially outside the stator and is used with an axis thereof oriented to extend substantially in a horizontal direction,
the stator includes a stator core (32) around which the stator winding is wound, the stator core having an annular wall (83) which is located outside the rotor in an axial direction of the rotor on an axial end portion of the stator core and faces an axial end surface of the rotor,
the annular wall serves as the coolant guide.

7. The rotating electrical machine as set forth in any one of claims 2 to 6, wherein the rotor includes magnet unit (23) and a magnet holder (22) which retains the magnet unit,
the magnet holder includes a cylindrical member (25) to which the magnet unit is secured and an end plate (27) secured to one of axial ends of the cylindrical member,
the coolant guide is arranged at one of axial ends of the stator winding which is located far away from the end plate of the magnet holder,
the magnet holder has formed therein a through-hole (82) which is located between the magnet unit and the end plate and passes through the magnet holder in a radial direction of the rotor.

8. The rotating electrical machine as set forth in any one of claims 1 to 7, wherein the coolant supply unit includes a coolant path (72) and a coolant outlet (73), the coolant path extending along a wall of the housing, the coolant outlet having the coolant, as delivered from the coolant path, drop down,
the coolant path has a momentum reducer (76) which works to decrease momentum of flow of the coolant.
